# EUROPÄISCHE PATENTSCHRIFT

(11) **EP 1 085 230 B1**
(45) Veröffentlichungstag und Bekanntmachung des Hinweises auf die Patenterteilung: **04.05.2005**
(21) Anmeldenummer: 00117219.6
(22) Anmeldetag: 11.08.2000
(51) Int. Cl.: F16D 65/12

(54) **Bremsscheibe**
Brake disc
Disque de frein

(30) Priorität: 14.09.1999 DE 19943893
(43) Veröffentlichungstag der Anmeldung: 21.03.2001
(73) Patentinhaber: Continental Teves AG & Co. oHG, 60488 Frankfurt (DE)
(72) Erfinder: Veith, Christoph, 61476 Kronberg (DE); Beer, Wilhelm, 65428 Rüsselsheim (DE)

(56) Entgegenhaltungen:
- EP-A- 0 811 783
- DE-A- 2 308 256
- DE-A- 2 450 151
- DE-A- 2 458 048
- FR-A- 2 698 142

## Beschreibung

Die Erfindung betrifft eine Bremsscheibe gemäß dem Oberbegriff des Patentanspruchs 1. Eine solche Bremsscheibe ist aus EP-A-0811 783 bekannt.

Bremsscheiben unterliegen bekanntlich ganz grundsätzlich äußerst hohen thermischen Beanspruchungen, welche zu entsprechenden thermischen Ausdehnungs- und Schwindungserscheinungen des Metallwerkstoffes führen. Der thermischen Längenänderung steht die Scheibenform im Wege, so daß insbesondere in dem sogenannten Reibring Spannungen aufgebaut werden. Solange es das Formänderungsvermögen des Werkstoffs zuläßt, werden die Längenänderungen in elastische Verformungen oder Verwölbung umgewandelt. Weil der Werkstoff jedoch bis an die Grenzen seiner Belastbarkeit auszulegen ist, kann nicht ausgeschlossen werden, daß das Formänderungsvermögen teilweise erschöpft ist, was zu plastischer Verformung oder Rißbildung führt. Fortschreitende Rißbildung endet schließlich mit dem Zerbrechen der Scheibe, was einem Totalausfall der Bremsanlage gleichkommt. Um diesem Effekt vorzubeugen, sind bereits aus der DE 42 33 525 A1 und der DE 26 20 261 A1 Bremsscheiben mit in einer Schnittebene mäanderförmigem Querschnitt des Reibrings bekannt. Zwar erlaubt dies einen verbesserten Abbau von Spannungen durch einen zieharmonikartigen Effekt. Die Herstellung derartiger Bremsscheiben ist jedoch kaum in einer Großserie machbar, weil Hinterschneidungen vorhanden sind, die nicht ohne weiteres gießtechnisch herstellbar sind. Ferner weisen die Reibringe in Querrichtung, also senkrecht zu der Reibfläche, eine erhöhte Labilität, das heißt eine Neigung zu dem sogenannten Scheibenschlag auf, was zu Schwingungen führen kann.

Aufgabe der Erfindung ist, eine thermisch vorteilhafte Bremsscheibe zu schaffen, welche in der Großserie einfach herstellbar ist, und gleichzeitig in Querrichtung eine hohe Robustheit gegenüber Verwölbung und Scheibenschlag aufweist.

Diese Aufgabe wird mit den kennzeichnenden Merkmalen des Patentanspruchs 1 gelöst.

Die Gesamtheit der Merkmale des Patentanspruchs 1 sorgt für eine stabile und dennoch thermisch unempfindliche sowie gut gekühlte Scheibe.

Weitere Vorteile der Erfindung gehen aus Unteransprüchen im Zusammenhang mit der Beschreibung und der Zeichnung hervor. Die Erfindung wird nachstehend anhand der Zeichnung, welche ein Ausführungsbeispiel zeigt, näher beschrieben. In der Zeichnung zeigt:
- Fig. 1:: Bremsscheibe in perspektivischer Ansicht sowie teilweise abgeschnitten;
- Fig. 2:: Ansicht des Scheibenumfang wie in Fig. 1, jedoch in einer zweidimensionalen Abwicklung.

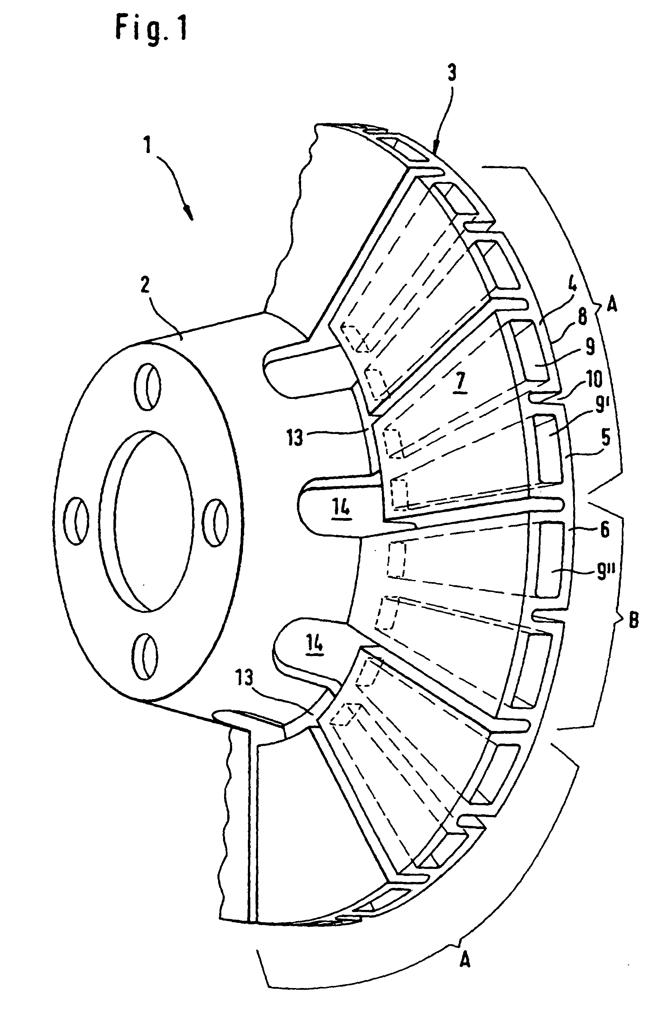

Die Figur 1 zeigt eine Bremsscheibe 1 mit einem Topf 2 zur Aufnahme einer Radnabe und mit einem einstückig an den Topf 2 angebundenen Reibring 3, welcher seinerseits eine Vielzahl von einstückig miteinander verbundenen Reibsegmenten 4,5,6 aufweist. Jedes Reibsegment 4,5,6 verfügt über zwei außenseitige Reibflächen 7,8 zur Auflage eines Bremsbelags und weist im Schnitt im wesentlichen quaderform auf, hat also einen geschlossenen Querschnitt. Im Inneren jedes Reibsegementes 4,5,6 verläuft in radialer Richtung ein Luftführungskanal 9,9',9'' für die Reibwärmeabfuhr. Jedes Segment 4 ist von dem in Umfangsrichtung nachfolgenden Segment 5 durch einen nach außen offenen Belüftungskanal 10 getrennt. Diese Abfolge wiederholt sich zwischen allen Reibsegmenten und gemäß dem bevorzugten Ausführungsbeispiel ist der Belüftungskanal 10 jeweils abwechselnd auf der ersten und auf der zweiten Reibfläche 7,8 vorgesehen. Der Belüftungskanal 10 erlaubt eine gewisse elastische Verformung der jeweils benachbarten Reibsegmente 4,5,6 zueinander, ohne daß sich diese infolge eines Zieharmonika-Effektes verwölben. Mit anderen Worten bleiben die Reibflächen 7,8 in jedem Fall planparallel zueinander, so daß der nicht gezeigte Reibbelag eine geeignete ebene Anlagefläche antrifft.

Dabei müssen die Belüftungskanäle 10 nicht notwendigerweise, wie in den Figuren dargestellt, radial verlaufen. Die Belüftungskanäle können durchaus auch zur Radialrichtung geneigt verlaufen und somit in Umfangsrichtung einen Winkel zur Radialrichtung einschließen. Weiterhin können die Belüftungskanäle 10 auf den jeweiligen Reibflächen 7, 8 auch geschwungen bzw. bogenförmig angeordnet sein.

Die Figur 1 läßt ferner erkennen, daß ein Teil der Reibsegmente (Typ A) zur Bildung von Lufteinströmkanälen 13 an dem kopfseitigen Fuß des jeweiligen Reibsegmentes im

Bereich seiner zweiten Reibfläche 8 an den Topf 2 angebunden ist, und daß ein Teil der Reibsegmente (Typ B) zur Bildung des Lufteinströmkanals 13 an einer topfabgewandten Seite im Bereich der ersten Reibseite 7 an den Topf 2 angebunden sind. Diese Anordnung wird auch als abwechselnde Außenbelüftung und Innenbelüftung bezeichnet.

Die Belüftung wird schließlich noch dadurch verbessert, daß in den Topf 2 in radialer Richtung Öffnungen 14 eingelassen sind, welche zumindest teilweise fluchtend zu den Lufteinströmkanälen 9,9' der auf der topfabgewandten Seite angebundenen Reibsegmente (Typ A) vorgesehen sind. Diese Anordnung erlaubt eine besonders effektive Speisung der radialen Luftführungskanäle 9,9'.

Die Kühlung wird letztlich noch dadurch optimiert, daß die Wandflächen 15,16 der Belüftungskanäle 10 derart zueinander geneigt sind, daß der größte reibflächenseitige Kanalöffungsquerschnitt im Bereich der Reibfläche 7,8 vorgesehen ist. Mit anderen Worten erstreckt sich der Belüftungskanal 10 ausgehend von der Reibfläche 7,8 quasi V-förmig bis zu einer Ausrundung 17.

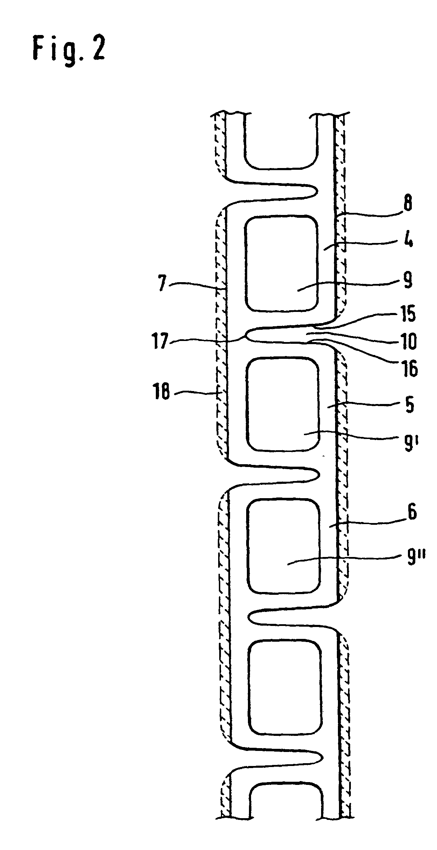

Figur 2 verdeutlicht schließlich noch mit strichpunktierten Markierungen einen an einem Gußrohling vorzusehenden Materialzuschlag 18, welcher mit geeigneten Maßnahmen (beispielsweise Drehen) zu entfernen ist.

## Patentansprüche

1. Bremsscheibe mit einem Topf (2) zur Aufnahme einer Radnabe und mit einem daran einstückig befestigten Reibring (3) mit erster und zweiter Reibflächen (7,8) zum Angriff der Reibkräfte, der aus einstückig am Umfang aneinander anschließenden Reibsegmenten (4, 5, 6) aufgebaut ist, welche einen in sich geschlossenen Querschnitt mit einem inneren Luftführungskanal (9, 9', 9'') aufweisen, **dadurch gekennzeichnet, dass** zwischen jedem der einzelnen Reibsegmente (4, 5, 6) jeweils ein weiterer, zu einer der Reibflächen (7, 8) offener Belüftungskanal (10) vorgesehen ist, welcher die einzelnen Reibsegmente (4, 5, 6) voneinander trennt, und dass am Umfang abwechselnd jeweils ein Reibsegment (4) mit einem nach der ersten Reibfläche (7) offenen Belüftungskanal und jeweils ein Reibsegment (5) mit einem nach der zweiten Reibfläche (8) offenen Belüftungskanal (10) vorgesehen sind.

2. Bremsscheibe nach Anspruch 1, **dadurch gekennzeichnet, dass** ein Teil der Reibsegmente (Typ A) zur Bildung eines mit dem Luftführungskanal (9,9') fluchtenden Lufteinströmkanals im Bereich seiner zweiten Reibfläche (8) an einem Topf (2) angebunden ist, und dass ein Teil der Reibsegmente (Typ B) im Bereich seiner ersten Reibfläche (7) an den Topf (2) angebunden ist.

3. Bremsscheibe nach Anspruch 1, **dadurch gekennzeichnet, dass** der offene Belüftungskanal (10) an seiner bezüglich der Scheibendicke tiefsten Stelle mit einer Ausrundung (17) versehen ist.

4. Bremsscheibe nach Anspruch 3, **dadurch gekennzeichnet, dass** die Wandseiten (15, 16) des offenen Belüftungskanals (10) derart zueinander geneigt sind, dass im Bereich der Reibfläche (7, 8) der größte reibflächenseitige Kanalöffnungsquerschnitt vorliegt, und dass im Bereich nahe der Ausrundung (17) der kleinste reibflächenseitige Kanalöffungsquerschnitt vorliegt.

5. Bremsscheibe nach Anspruch 1, **dadurch gekennzeichnet, dass** in dem Topf (2) radiale Öffnungen (14) vorgesehen sind, welche fluchtend zu den Lufteinströmkanälen (13) der auf der topfabgewandten Seite angebunden Reibsegmente (4,5) angeordnet sind.

## Claims

1. Brake disc including a bowl (2) for accommodating a wheel hub, and a friction ring (3) integrally fastened thereto and having first and second friction surfaces (7, 8) for the application of the friction forces, said friction ring being composed of friction segments (4, 5, 6) integrally succeeding each other at the periphery and having a cross-section closed in itself and an inside air-conveying channel (9, 9', 9''),
**characterized in that** another ventilating channel (10), open towards one of the friction surfaces (7, 8), is respectively provided between each of the individual friction segments (4, 5, 6) and isolates the individual friction segments (4, 5, 6) from each other, and **in that** respectively one friction segment (4) with a ventilating channel open towards the first friction surface (7) and respectively one friction segment (5) with a ventilating channel (10) open towards the second friction surface (8) is alternately provided at the periphery.

2. Brake disc as claimed in claim 1,
**characterized in that** a part of the friction segments (type A) in the area of its second friction surface (8) is tied to a bowl (2) for forming an air inlet channel being in alignment with the air-conveying channel (9, 9'), and **in that** a part of the friction segments (type B) in the area of its first friction surface (7) is tied to the bowl (2).

3. Brake disc as claimed in claim 1,
**characterized in that** the open ventilating channel (10) has a rounding (17) at its deepest point with respect to the thickness of the disc.

4. Brake disc as claimed in claim 3,
**characterized in that** the wall sides (15, 16) of the open ventilating channel (10) are inclined towards each other in such a way that the largest channel opening cross-section facing the friction surface prevails in the area of the friction surface (7, 8), and **in that** the smallest channel opening cross-section facing the friction surfaces prevails close to the rounding (17).

5. Brake disc as claimed in claim 1,
**characterized in that** the bowl (2) contains radial openings (14) which are arranged in alignment with the air inlet channels (13) of the friction segments (4, 5) tied to the side remote from the bowl.

## Revendications

1. Disque de frein comportant un pot (2) pour accueillir un moyeu de roue et un anneau de frottement (3) fixé à ce dernier de manière intégrante et prévu d'une surface frottante première et d'une surface secondaire (7,8) pour attaquer les forces frottantes, l'anneau de frottement étant formé par des segments de frottement (4, 5, 6) circonférentiellement joignant l'un à l'autre de manière intégrante, les segments de frottement ayant une section transversale fermée en soi avec un canal portant de l'air (9, 9', 9"') intérieur,
**caractérisé en ce qu'**un autre canal d'aération (10) est prévu entre les segments de frottement (4, 5, 6) individuels ouvert vers l'une des surfaces frottante (7,8), ledit canal d'aération séparant les segments de frottement (4, 5, 6), et qu'un segment de frottement (4) comportant un canal d'aération ouvert vers la surface frottante (7) première, et un segment de frottement (5) comportant un canal d'aération (10) ouvert vers la surface de frottement (8) secondaire sont prévus circonférentiellement de manière alternante.

2. Disque de frein selon la revendication 1,
**caractérisé en ce qu'**un partie des segments de frottement (type A), pour former un port d'admission de l'air s'alignant avec le canal portant de l'air (9, 9'), dans la région de sa surface de frottement (8) secondaire, est fixé à un pot (2), et qu'une partie des segments de frottement (type B), dans la région de sa surface de frottement (7) première, est fixé au pot (2).

3. Disque de frein selon la revendication 1,
**caractérisé en ce que** le canal d'aération (10) ouvert, au point le plus bas relatif à l'épaisseur de disque, est prévu d'un carénage (17).

4. Disque de frein selon la revendication 3,
**caractérisé en ce que** les côtés de parois (15, 16) du canal d'aération (10) ouvert sont en pente l'un vers l'autre tellement que la section de l'ouverture de canal au côté de la surface frottante est la plus grande dans la région de la surface frottante (7, 8), et que la section d'ouverture de canal au coté de la surface frottante est la plus petite dans la région voisine le carénage (17).

5. Disque de frein selon la revendication 1,
**caractérisé en ce que** des ports (14) radiaux sont prévus dans le pot (2) qui sont disposés de manière s'alignante aux ports d'admissions de l'air (13) des segments (4, 5) de frottement fixés sur le côté détourné du pot.
